Europäisches Patentamt

European Patent Office

Office européen des brevets

(19)

(11) Veröffentlichungsnummer: **0 112 500**
**B1**

(12) **EUROPÄISCHE PATENTSCHRIFT**

(45) Veröffentlichungstag der Patentschrift:
**19.02.86**

(51) Int. Cl.⁴: **C 01 G 56/00**

(21) Anmeldenummer: **83111736.1**

(22) Anmeldetag: **23.11.83**

(54) Verfahren zum Herstellen von PuO2-haltigen Kristallen.

(30) Priorität: **06.12.82 DE 3245051**

(43) Veröffentlichungstag der Anmeldung:
**04.07.84 Patentblatt 84/27**

(45) Bekanntmachung des Hinweises auf die Patenterteilung:
**19.02.86 Patentblatt 86/8**

(84) Benannte Vertragsstaaten:
**DE FR GB IT**

(56) Entgegenhaltungen:
**DE - C - 2 811 959**

(73) Patentinhaber: **ALKEM GMBH, Postfach 110069,
D-6450 Hanau 11 (DE)**

(72) Erfinder: **Schneider, Volker, Dr., Am Eichwald 42,
D-6056 Heusenstamm (DE)**
Erfinder: **Stoll, Wolfgang, Dr., Ameliastrasse 25,
D-6450 Hanau 1 (DE)**
Erfinder: **Druckenbrodt, Wolf-Günther, Dr.,
Buchenweg 1a, D-6458 Rodenbach (DE)**

(74) Vertreter: **Mehl, Ernst, Dipl.-Ing. et al, Postfach 22 01 76,
D-8000 München 22 (DE)**

## Beschreibung

Die Erfindung betrifft ein Verfahren zum Herstellen von $PuO_2$-haltigen Kristallen durch Aufoxidieren von Plutonium in salpetersaurer Ausgangslösung zu $Pu^{6+}$, Ausfällen von ammoniumplutonylcarbonathaltigen Kristallen durch Reaktion mit Ammonium- und Carbonationen und anschliessendes Abtrennen und Kalzinieren dieser Kristalle.

Ein derartiges Verfahren ist aus der deutschen Patentschrift Nr 2811959 bekannt. Nach dieser Patentschrift werden eine salpetersaure Uranylnitrat- und eine salpetersaure Plutoniumnitratlösung gemischt und das Plutonium durch Erhitzen und Einengen dieser Lösungsmischung bis zur Wertigkeitsstufe 6 aufoxidiert. Die so eingeengte Lösung wird wieder in verdünnter Salpetersäure aufgenommen, der in einem anderen Gefäss Ammoniumcarbonat, Ammoniak und Kohlendioxid zugesetzt werden. Durch Reaktion mit den gebildeten Ammoniumcarbonationen fällt Ammonium-Uranyl-Plutonyl-Carbonat in Kristallform aus. Dieses Ammonium-Uranyl-Plutonyl-Carbonat wird abfiltriert, getrocknet und unter Erhitzen auf etwa 600°C kalziniert, so dass sich $U/PuO_2$ in Form von Mischkristallen bildet, das zu Kernbrennstoff für Kernreaktorbrennelemente weiterverarbeitet werden kann.

Der Erfindung liegt die Aufgabe zugrunde, das bekannte Verfahren weiterzubilden und auch auf stark verunreinigte salpetersaure Ausgangslösungen anwendbar zu machen.

Zur Lösung dieser Aufgabe ist ein Verfahren der eingangs erwähnten Art erfindungsgemäss dadurch gekennzeichnet, dass in eine wässerige Ausgangsvorlagelösung von Ammoniumcarbonat und/oder Ammoniumacetat die salpetersaure Lösung mit dem aufoxidierten $Pu^{6+}$ sowie Carbonat- ($CO_3^{2-}$) und/oder Acetat- ($CH_3COO^-$) Ionen und $NH_3$ in einer solchen Konzentration eindosiert werden, dass das Molverhältnis von Carbonat- und/oder Acetationen zu den $Pu^{6+}$-Ionen in der Vorlagelösung mindestens 4:1 beträgt und sich in der Vorlagelösung gelöst verbleibende plutoniumhaltige Carbonato- bzw. Acetato-Komplexverbindungen bilden, während schwer lösliche Metallhydroxidverbindungen ausfallen, dass diese ausgefallenen Metallhydroxidverbindungen abgetrennt werden und dass hierauf so viel $NH_3$ und Carbonationen der Vorlagelösung zugesetzt werden, dass schliesslich die ammoniumplutonylcarbonathaltigen Kristalle ausfallen.

Die Erfindung geht von der Erkenntnis aus, dass Plutonium und auch Uran in ihrer sechswertigen Oxidationsstufe lösliche Carbonato- und Acetato-Komplexverbindungen bilden. Salze einer Reihe von Metallen, die häufig als Verunreinigung in salpetersauren Ausgangslösungen von Plutonium, wie sie beim Wiederaufbereiten von Kernreaktorbrennelementen anfallen, enthalten sind, bilden mit Carbonat- und Acetationen keine löslichen Komplexverbindungen, und diese Metalle fallen daher bei einem entsprechenden pH-Wert der Vorlagelösung in einem Niederschlag aus. Salze anderer Metalle hingegen bleiben nicht nur bei diesem pH-Wert, sondern auch bei dem nachfolgenden Ausfällen der ammoniumplutonylcarbonathaltigen Kristalle bei erhöhtem pH-Wert in Lösung und werden durch diesen nachfolgenden Ausfällschritt abgetrennt.

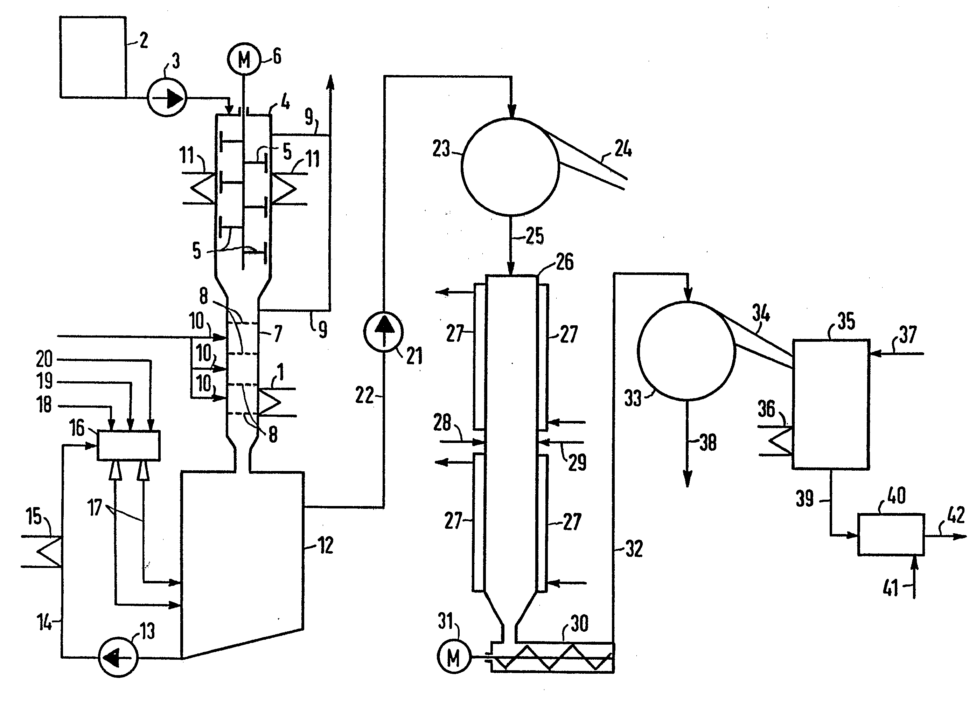

Die Erfindung und ihre Vorteile seien anhand der Zeichnung an einem Ausführungsbeispiel näher erläutert:

In der Zeichnung ist schematisch eine Anlage zur Durchführung eines erfindungsgemässen Verfahrens dargestellt. Diese Anlage weist einen Vorratsbehälter 2 auf, dem über eine Förderpumpe 3 ein Dünnschichtverdampfer 4 nachgeschaltet ist. In diesem Dünnschichtverdampfer 4 sind vertikal übereinander Wischer 5 angeordnet, die mit Hilfe eines Elektromotors 6 um die vertikale Längsachse des Dünnschichtverdampfers 4 in Umdrehung versetzt werden und die oben in den Dünnschichtverdampfer 4 eingegebene flüssige Lösung als feinen Oberflächenfilm innen auf der Wand des Dünnschichtverdampfers 4 verteilen.

Am unteren Ende des Dünnschichtverdampfers 4 ist eine hohlzylinderförmige Blasensäule 7 angeflanscht, in der vertikal übereinander Siebböden 8 angeordnet sind.

Am oberen Ende des Dünnschichtverdampfers 4 und der Blasensäule 7 ist eine Ableitung 9 für abdestillierte Salpetersäure vorgesehen. Oberhalb eines jeden Siebbodens 8 in der Blasensäule 7 mündet eine Zuführleitung 10 für konzentrierte Salpetersäure in die Blasensäule 7.

Ferner ist sowohl der Dünnschichtverdampfer 4 als auch die Blasensäule 7 mit Hilfe aussen angebrachter elektrischer Heizeinrichtungen 11 und 1 beheizbar.

Die Blasensäule 7 ist an ihrem Unterende auf ein nachgeschaltetes Reaktionsgefäss 12 aufgesetzt, an dessen Boden eine mit einer Förderpumpe 13 versehene Umlaufleitung 14 angeschlossen ist. Diese Umlaufleitung 14 ist mit einer elektrischen Heizeinrichtung 15 beheizbar. Sie führt über eine beispielsweise als Düsenkastenausgebildete Mischeinrichtung 16 und Rückführleitungen 17 in das Reaktionsgefäss 12 zurück. Die Mischeinrichtung 16 weist Zuführleitungen 18, 19 und 20 für $H_2O$, $NH_3$ und $CO_2$ bzw. Ammoniumacetat auf.

Vom Reaktionsgefäss 12 geht ferner eine eine Förderpumpe 21 enthaltene Suspensionsleitung 22 ab, an der eine Zentrifuge 23 angeschlossen ist, die einen Feststoffaustragstutzen 24 aufweist. Ein Flüssigkeitsaustragstutzen 25 der Zentrifuge 23 ist an einen Fällbehälter 26 angeschlossen, an dessen äusserer Mantelfläche von Kühlwasser im Gegenstromprinzip durchströmte Kühlrohre 27 angeordnet sind. Dieser Fällbehälter 26 weist ferner einen Zuführstutzen 28 für $NH_3$ und einen Zuführstutzen 29 für $CO_2$ auf.

Am unteren Ende des Fällbehälters 26 ist eine Suspensionspumpe 30 mit einem elektrischen Antriebsmotor 31 angeschlossen, der über eine Suspensionsleitung 32 einer weiteren Zentrifuge 33 nachgeschaltet ist. An einem Feststoffaustrag 34 dieser Zentrifuge 33 ist ein Kalzinationsofen 35 angeschlossen, der mit einer elektrischen Heizeinrichtung 36 versehen ist und an dem sich ein Zuführstutzen 37 für aus 96% $N_2$ und 4% $H_2$ bestehendes Reduziergas befindet. Die Zentrifuge 33 ist ferner mit einem Mutterlaugenaustrag 38 versehen. Der Kalzinationsofen 35 weist ferner einen Pulveraustrag 39 auf, dem eine elektrisch beheizbare Wertigkeitseinstelleinrichtung 40 mit einem Luftzuführstutzen 41 zugeordnet ist.

In den Vorratsbehälter 2 wird eine stark mit Metallionen verunreinigte salpetersaure Ausgangslösung von Uranylnitrat $UO_2 (NO_3)_2$ und Plutoniumnitrat $Pu (NO_3)_4$ eingefüllt, wie sie z.B. beim Wiederaufbereiten von abgebranntem Kernreaktorbrennstoff oder Verarbeiten von Kernreaktorbrennstoff anfällt. Diese Lösung wird durch die Förderpumpe 3 in den Dünnschichtverdampfer 4 gefördert, den sie von oben nach unten durchläuft. Hierbei werden die Wischer 5 durch den Elektromotor 6 in Umdrehung versetzt und der Dünnschichtverdampfer 4 mit den elektrischen Heizeinrichtungen 11 beheizt.

Da die Lösung im Dünnschichtverdampfer 4 zu einer dünnen Oberflächenschicht verteilt wird, braucht die Verweilzeit der Lösung im Dünnschichtverdampfer 4 nur einige Sekunden zu betragen, um eine Aufkonzentration des Urans und Plutoniums auf ca. 1000 g pro Liter zu erzielen, ohne dass eine Polymerisation des Plutoniums infolge von örtlicher Überhitzung der Lösung und von Säuremangel eintreten kann.

Die aufkonzentrierte Lösung gelangt sodann in die Blasensäule 7, die sie ebenfalls von oben nach unten durchsetzt. In dieser Blasensäule 7 wird das Plutonium zu $Pu^{6+}$ in Gegenwart von konzentrierter Salpetersäure bei einer Temperatur von 150°C und einem Reaktionsdruck von 1 bar aufoxidiert und alle freie Salpetersäure abgezogen, so dass schmelzflüssiges Uranyl-Plutonylnitratsalz in das Reaktionsgefäss 12 tropft, in dem sich eine wässerige Ausgangsvorlagelösung vom Ammoniumcarbonat und/oder Ammoniumacetat befindet.

Die im Reaktionsgefäss 12 befindliche Flüssigkeit wird ständig mit Hilfe der Umlaufpumpe 13 über die Umlaufleitung 14, durch die Mischeinrichtung 16 und die Zuführleitungen 17 umgewälzt und mit der elektrischen Heizeinrichtung 15 beheizt. In der Mischeinrichtung 16 wird der umgewälzten Flüssigkeit über die Zuführleitung 18 Wasser, über die Zuführleitung 19 Ammoniak $NH_3$ und über die Zuführleitung 20 Kohlendioxid $CO_2$, wenn die Ausgangsvorlagelösung Ammoniumcarbonat enthält, und/oder festes Ammoniumacetat zugeführt, wenn die Ausgangsvorlagelösung Ammoniumacetat enthält. Mit Hilfe des über die Zuführleitung 19 zugeführten Ammoniaks wird ein pH-Wert im Bereich von 7-8 in der Vorlagelösung aufrechterhalten. Durch das zugeführte $CO_2$ bzw. Ammoniumacetat bilden sich in der Lösung im Reaktionsgefäss 12 Carbonationen $CO_3^{2-}$ bzw. Acetationen $CH_3COO^-$. Das Molverhältnis von Carbonat- und/oder Acetationen zu den $Pu^{6+}$-Ionen in der Vorlagelösung beträgt mindestens 4:1, vorzugsweise 6:1.

Allgemein ist dieses Molverhältnis umso höher anzusetzen, je grösser die Uranylionenkonzentration in der salpetersauren Ausgangslösung ist. Zur Komplexierung eines Uranylions sind genauso viel Carbonat- und/oder Acetationen erforderlich wie zur Komplexierung eines Plutonylions.

Die Zufuhr von Uranyl-Plutonylnitrat aus der Blasensäule 7 und von Wasser über die Zuführleitung 18 in das Reaktionsgefäss 12 kann günstigerweise so eingestellt werden, dass sich dort eine Uran/Plutonium-Konzentration von ca. 200 g pro Liter ergibt.

Infolge der hohen Carbonat- bzw. Acetationenkonzentration in der Vorlagelösung im Reaktionsgefäss 12 bleiben dort Uran und Plutonium als Carbonato- bzw. Acetato-Komplexverbindungen in Lösung. Andere Metallionen bilden schwer lösliche Hydroxidverbindungen und fallen in der Lösung im Reaktionsgefäss 12 aus.

Die so im Reaktionsgefäss 12 gebildete Suspension wird mit Hilfe der Förderpumpe 21 durch die Suspensionsleitung 22 hindurch in die Zentrifuge 23 gefördert, in der die ausgefallenen Metallhydroxidverbindungen abzentrifugiert und durch den Austragsstutzen 24 ausgetragen werden.

Die klare Mutterlösung gelangt aus der Zentrifuge 23 in den Fällbehälter 26, in dem ihre Temperatur bei einem Druck von 1 bar auf 20°C abgesenkt wird. Der Durchsatz von $NH_3$ und $CO_2$ durch die Zuführstutzen 28 und 29 ist so gewählt, dass der pH-Wert der Mutterlösung auf > 8 bis 10, vorzugsweise auf 8,4 bis 8,6, gesteigert wird und 99 w/o des gelösten Urans und Plutoniums als Ammonium-Uranyl-Plutonyl-Carbonat $(NH_4)_4U/PuO_2(CO_3)_3$ ausfällt. Dies geschieht, wenn die Mutterlösung ca. 3- bis 4- molar an Ammoniumcarbonat ist.

Die sich ergebende Suspension wird mit Hilfe der vom Elektromotor 31 angetriebenen Suspensionspumpe 30 durch die Zuführleitung 32 zur Zentrifuge 33 gefördert, in der das abzentrifugierte Ammonium-Uranyl-Plutonyl-Carbonat durch den Feststoffaustragsstutzen 34 in den Kalzinationsofen 35 gelangt, in dem das Ammonium-Uranyl-Plutonyl-Carbonat durch Erhitzen auf Temperaturen von etwa 600°C-900°C in Gegenwart von Reduziergas zu $U/PuO_2$-Pulver reduziert wird. Das Reduziergas kann aus einem Stickstoff-Wasserstoff-Gemisch mit 4 v/o Wasserstoff bestehen.

Das $U/PuO_2$-Pulver wird durch die Austragsleitung 39 aus dem Kalzinationsofen 35 in die Wertigkeitseinstelleinrichtung 40 geleitet, in der durch Aufheizen in Gegenwart von Luft ein vorgegebenes U/Pu:O-Verhältnis eingestellt wird. Aus der Wertigkeitseinstelleinrichtung 40 über den Austragsstutzen 42 ausgetragenes Uran-Plutonium-Mischoxidpulver steht zum Weiterverarbeiten zu Kernreaktorbrennelementen zur Verfügung.

Verunreinigende Metallionen, die evtl. noch in der Zentrifuge 33 zugeführten Suspension in gelöster Form vorhanden sein können, verbleiben in gelöster Form in der durch den Mutterlaugenaustrag 38 aus der Zentrifuge 33 ausgetragenen Mutterlauge und gelangen so nicht in das in der Zentrifuge 33 abzentrifugierte Ammonium-Uranyl-Plutonyl-Carbonat. Von Vorteil ist es, wenn die Lösung im Fällbehälter 26 noch so viel z.B. Ethylendiamintetraessigsäure als Kationenkomplexbildner enthält, dass Kolloide von Metallverbindungen in der Lösung im Fällbehälter 26 ohne Beeinträchtigung der Ammonium-Uranyl-Plutonyl-Carbonatausfällung vermieden werden.

Das erfindungsgemässe Verfahren eignet sich insbesondere für einen kontinuierlichen Verfahrensablauf. Es hat eine inhärente Reinigungswirkung auf das Verfahrensprodukt, ohne dass brennbare Reaktionspartner verwendet werden müssten. Trotzdem erlaubt das erfindungsgemässe Verfahren die Verwendung von stark z.B. mit metallischen Kernspaltprodukten verunreinigten Ausgangslösungen ohne Beeinträchtigung der Reinheit des Verfahrensproduktes.

Ein Liter als Referenzmenge in den Vorratsbehälter 2 eingefüllte Uranyl-Plutonyl-Nitrat-Ausgangslösung enthält 150 g Uran und 100 g Plutonium sowie als Verunreinigungen 10 g Aluminium, 5 g Americium, 10 g Eisen, 10 g Chrom und 10 g Nickel in 1-molarer $HNO_3$. Bezogen auf diese Referenzmenge von 1 l Ausgangslösung wird bei Ammonium-Carbonat enthaltender Ausgangsvorlagelösung im Reaktionsgefäss 12 in der Mischeinrichtung 16 die umgewälzte Flüssigkeit mit 3 Mol $NH_3$ und 7 Mol $CO_2$ versetzt. Die durch den Austragstutzen 24 aus der Zentrifuge 23 ausgetragenen ausgefallenen Metallhydroxidverbindungen enthalten 80% des Aluminiums, 90% des Americiums, 99% des Eisens und 95% des Nickels aus der in den Vorratsbehälter 2 eingefüllten Referenzmenge von 1 l Ausgangslösung. Bezogen auf diese Referenzmenge von 1 l Ausgangslösung, werden ferner 5 Mol $NH_3$ durch den Zufuhrstutzen 28 und 1 Mol $CO_2$ durch den Zufuhrstutzen 20 in den Fällbehälter 26 eingeleitet, so dass sich der pH-Wert der Mutterlösung aus der Zentrifuge 23 in diesem Fällbehälter 26 auf 8,6 einstellt. Das über die Austragsleitung 39 aus dem Kalzinationsofen 35 ausgetragene, aus der Referenzmenge von 1 l Ausgangslösung gewonnene U/$PuO_2$-Pulver enthält nur noch bezogen auf die Summe von Uran und Plutonium 400 ppm Aluminium, 400 ppm Americium, 40 ppm Eisen, 200 ppm Nickel und 40 ppm Chrom, während die durch den Mutterlaugenaustrag 38 aus der Zentrifuge 33 ausgetragene Mutterlauge 95% des Aluminiums, 80% des Americiums, 99,9% des Chroms, 90% des Nickels und 90% des Eisens aus den Verunreinigungsresten der Referenzmenge von 1 l Ausgangslösung enthält, die noch in der über den Flüssigkeitsaustragsstutzen 25 aus der Zentrifuge 23 ausgetragenen Mutterlösung vorhanden sind.

## Patentansprüche

1. Verfahren zum Herstellen von $PuO_2$-haltigen Kristallen durch Aufoxidieren von Plutonium in salpetersaurer Ausgangslösung zu $Pu^{6+}$, Ausfällen von ammoniumplutonylcarbonathaltigen Kristallen durch Reaktion mit Ammonium- und Carbonationen und anschliessendes Abtrennen und Kalzinieren dieser Kristalle, dadurch gekennzeichnet, dass in eine wässerige Ausgangsvorlagelösung von Ammoniumcarbonat und/oder Ammoniumacetat die salpetersaure Lösung mit dem aufoxidierten $Pu^{6+}$ sowie Carbonat- ($CO_3^{2-}$) und/oder Acetat- ($CH_3COO^-$) Ionen und $NH_3$ in einer solchen Konzentration eindosiert werden, dass das Molverhältnis von Carbonat- und/oder Acetationen zu den $Pu^{6+}$-Ionen in der Vorlagelösung mindestens 4:1 beträgt und sich in der Vorlagelösung gelöst verbleibende plutoniumhaltige Carbonato- bzw. Acetato-Komplexverbindungen bilden, während schwer lösliche Metallhydroxidverbindungen ausfallen, dass diese ausgefallenen Metallhydroxidverbindungen abgetrennt werden und dass hierauf so viel $NH_3$ und Carbonationen der Vorlagelösung zugesetzt werden, dass schliesslich die ammoniumplutonylcarbonathaltigen Kristalle ausfallen.

2. Verfahren nach Anspruch 1, dadurch gekennzeichnet, dass zum Ausfällen der Metallhydroxidverbindungen und in Lösung zum Halten der Carbonato- bzw. Acetato-Komplexverbindungen der Vorlagelösung das $NH_3$ in einer solchen Konzentration zugesetzt wird, dass der pH-Wert der Vorlagelösung im Bereich von 7-8 gehalten wird.

3. Verfahren nach Anspruch 1, dadurch gekennzeichnet, dass zum Ausfällen der ammoniumplutonylcarbonathaltigen Kristalle nach dem Abtrennen der ausgefallenen Metallhydroxidverbindungen der Vorlagelösung das $NH_3$ in einer solchen Konzentration zugesetzt wird, dass der pH-Wert der Vorlagelösung im Bereich > 8 bis 10, vorzugsweise von 8,4 bis 8,6, gehalten wird.

## Claims

1. A process for producing crystals containing $PuO_2$ by oxidizing plutonium in a nitric acid starting solution to $Pu^{6+}$, precipitating crystals containing ammonium plutonyl carbonate by reaction with ammonium ions and carbonate ions, and subsequently separating and calcining these crystals, characterised in that the nitric acid solution with the oxidized $Pu^{6+}$ and carbonate ions ($CO_3^{2-}$) and/or acetate ions ($CH_3COO^-$) and $NH_3$ is dosed into an aqueous initial receiving solution of ammonium carbonate and/or ammonium acetate, in such a concentration that the molar ratio of carbonate ions and/or acetate ions to the $Pu^{6+}$-ions in the receiving solution is at least 4:1 and carbonato- or acetato-complex compounds, as the case may be, which contain plutonium and remain in the receiving solution in a dissolved state, are formed, whilst difficultly-soluble metal hydroxide compounds are deposited; that the deposited metal hydroxide compounds are separated and that $NH_3$ and carbonate-ions of the receiving solution are subsequently added to such an extent that the crystals containing ammonium plutonyl carbonate are finally deposited.

2. A process as claimed in Claim 1, characterised in that in order to precipitate the metal hydroxide compounds and to maintain the carbonato- or acetato-complex compounds in a dissolved state, the receiving solution is supplied with $NH_3$ in such a concentration that the pH-value of the receiving solution is maintained in the range of 7-8.

3. A process as claimed in Claim 1, characterised in that, in order to precipitate the crystals containing ammonium plutonyl carbonate, after the separation of the deposited metal hydroxide compounds, the receiving solution is supplied with $NH_3$ in a concentration such that the pH-value of the original solution is maintained in the range of > 8 to 10, preferably 8.4 to 8.6.

## Revendications

1. Procédé de préparation de cristaux renfermant du $PuO_2$, par oxydation du plutonium en $Pu^{6+}$ dans une solution de départ nitrique, par précipitation des cristaux renfermant du carbonate d'ammonium et de plutonyle par réaction sur des ions ammonium et des ions carbonate et ensuite par séparation et par calcination des cristaux, caractérisé en ce qu'il consiste à introduire dans une solution réceptrice aqueuse de départ de carbonate d'ammonium et/ou d'acétate d'ammonium, la solution nitrique avec le $Pu^{6+}$ oxydé ainsi que les ions carbonate ($CO_3^{2-}$) et/ou acétate ($CH_3COO^-$) et du $NH_3$ en une concentration telle que le rapport molaire des ions carbonate et/ou acétate aux ions $Pu^{6+}$, dans la solution réceptrice, soit d'au moins 4:1 et qu'il se forme des composés complexes carbonato ou acéto renfermant du plutonium restant à l'état dissous dans la solution réceptrice, tandis que des composés d'hydroxyde métallique difficilement solubles précipitent, à séparer ces composés d'hydroxyde métallique précipités et à ajouter ensuite assez de $NH_3$ et d'ions carbonate à la solution réceptrice pour que précipitent finalement les cristaux renfermant du carbonate d'ammonium et de plutonyle.

2. Procédé suivant la revendication 1, caractérisé en ce qu'il consiste, pour précipiter les composés d'hydroxyde métallique et pour maintenir en solution les composés complexes carbonato ou acéto de la solution réceptrice, à ajouter le $NH_3$ en une concentration telle que le pH de la solution réceptrice soit maintenu dans la plage de 7 à 8.

3. Procédé suivant la revendication 1, caractérisé en ce qu'il consiste, pour précipiter les cristaux renfermant du carbonate d'ammonium et de plutonyle après la séparation des composés d'hydroxyde métallique précipités de la solution réceptrice, à ajouter le $NH_3$ à une concentration telle que le pH de la solution réceptrice soit maintenu dans la plage > 8 à 10 et de préférence de 8,4 à 8,6.

0 112 500